# EUROPEAN PATENT APPLICATION

(11) **EP 1 806 320 A2**
(43) Date of publication of application: **11.07.2007**
(21) Application number: 05380270.8
(22) Date of filing: 19.12.2005
(51) Int. Cl.: C02F 1/00, C02F 1/28, C02F 1/42, C02F 1/50

(54) **Container of vitrified ceramic provided with filter for water of domestic consumption**

(30) Priority: 19.10.2005 ES 200502282 U
(71) Applicant: Garijo Casal, Jesus, 25006 Lleida (ES); Garijo Rivaben, Fernando, 25110 Alpicat - Lleida (ES)
(72) Inventor: Garijo Casal, Jesus, 25006 Lleida (ES); Garijo Rivaben, Fernando, 25110 Alpicat - Lleida (ES)

(57) **Abstract**

CONTAINER OF VITRIFIED CERAMIC PROVIDED WITH FILTER FOR WATER FOR DOMESTIC CONSUMPTION. where the water deposited within upper compartment 1, will happen through the component that characterize the filter 3, that is, through the hollow cylindric cartridge of microporous ceramic 14 with an internal silver nitrate coating 15, also through its content in granular activated charcoal and resin of ionic exchange 16 and through the fine microfiber fabric of polypropylene 18 that internally upholsters the polythene funnel 17, that closes cartridge 14 and serves as base for all the set of filter 3, entering and leaving filtered through orifices 19 and 24, respectively, pertaining ones to the tube 20 of funnel to deposit itself within compartment 2 provided with an external faucet 5, adapted to a lateral orifice 13 near its base 12, allowing its provision. Borders 10 and 11 allow the connection between compartments 1 and 2. Connection border 6 and connection border 7 allow to adapt a lid 4, with a knob 8, in the upper opening of the piece 1. Finally, in the base of the compartment 1, the orifice 9 will receive the filter 3, and the washers 21 and 22 as well as the thread 23 maintains the filter 3 in its position ,.

## Description

### OBJECT OF THE INVENTION

The present invention expressed in the statement of this descriptive memory, talks about to a filter for water for domestic consumption adapted in a container of vitrified ceramic divided in two compartments, one upper and another lower one, with minimum capacity of 6,5 litres. So much the filter as the ceramic container that lodges it, they were conceived to obtain a filtered water of quality and in quantity.

The filter is conceived to filter so much the chlorinated water as the non-chlorinated water. Its surface and its internal components as a unit, they have a purpose to eliminate completely the flavor and the scent, as by-products of chlorine, of the calcium and other salts utilized in the processing of the drinking water, to trap solid particles in suspension, to filter the materials that are removed from the water conductions, like the lead and other heavy metals of old fittings, to filter the water that suffer contamination as a result of dumping activities such as DDT, benzene, dioxins, mercury, copper, magnesium and aluminium among others, and it presents an internal component with bactericidal purpose.

### ANTECEDENTS OF THE INVENTION

Nowadays exist many filters for the consumption water domestic. The most common are those, which are found in the interior of plastic containers connected to an inlet of the faucet and installed next to the kitchen sink or, those that they are found inside plastic containers connected directly to the pipe under the worktop. Its major inconveniences are its cost of installation and of its spare parts.

Also filters of small size exist, like the ones which are utilized in the interior of a conventional plastic jug divided internally in two compartments. In the upper one the replaceable filter is found and in the lower one the filtered water is deposited. This filter has a plastic cartridge with large entry and exit points of water in its upper and lower part respectively, leaking whereupon the water take direct contact with its two internal filter components. The passing of the water inside of these filters is carried out very rapidly and like result the filtrate is partial in terms of the elimination of flavor and scent to chlorine and calcium. Besides, it's a filter of short life, that has to be changed every month. Finally, they are designed for containers having a capacity of 1,5 liters in each compartment.

In this descriptive report, the proposed filter, it filters the impurities and eliminates completely the flavor and scent of the by-products of chlorine and calcium in the water by means of a system with five phases of filtrate. The first fase is of microporous ceramic, the second phase is of silver nitrate coating , the third phase is of activated charcoal grains, the fourth is of resin of ionic exchange and finally the fifth phase is of polypropylene microfiber. As a unit, it carries out the filtrate of the water in a relatively slow form but of effective way. The filtered water obtained this free of flavor of scent to chlorine and calcium, as well as of bacteria, particulas been accustomed to in suspension and metals. These filters are designed to be adapted to the interior of a ceramic container divided into two compartments, one upper that serves as a deposit for the unfiltered water and where the filter in its interior adapts and a connected lower compartment to the to the upper compartment, that serves a deposit for filtered water and thats it has a lateral orifice near its base, where a small faucet adapts. Each compartment has a minimum capacity of 6,5 liters, depending on size and form in which the compartments will be manufactured. The spare part of the filter,or the filters, that is in the interior of the upper compartment is made every six months.

So much the filter as the container of vitrified ceramica are designed to obtain an amount of greater affluent water and better quality, if compared with the other filters adapted in containers non-connected to the pipes or the faucet, well like this thought to be an economic and simpler method with results not less effective if compared to the filters adapted in containers connected to the pipes or the faucet.

### DESCRIPTION OF THE INVENTION

The devices of the invention that are described to continuation, they are a container of vitrified ceramic provided with filter for water for the domestic consumption, that they have as objective to obtain from a practical and economical manner a filtered water for domestic consumption of quality and in amount.

The container of vitrified ceramic can vary in size, color and shape; it could be square, retangular, oval, cylindrical or spherical and it is divided into two compartments. Firstly, an upper compartment where the unfiltered water is deposited and due to presence of the one or more orifices located in its base, allows the adptation of one or more filters inside and secondly, a lower compartment whose upper part is completely opened to allow the connection of the upper compartment as well as to allow the access of the outlet tube of water of the filter to its interior and will serve as a deposit for the filtered water. This lower compartment also supplies the filtered water by mean of a external stainless steel or non-poisonous polythene faucet, located near its base. Each one of these two compartments which constitute the ceramic container have a 6,5 liters capacity, which can vary depending on their shape and size.

The filter, which adapts inside the upper compartment and whose number can vary according to the number of orifices in the base of this compartment, is made up by a hollow cylindric cartridge of microporous ceramic which is internally coated with silver nitrate and has activated charcoal and resin of ionic exchange inside, both of a grain type, i.e. made from various sand-sized grains. This hollow cylindrical cartridge of microporous ceramic is closed in its base due to the connection of a non-poisonous polythene funnel which is internally coated with a fine microfiber fabric of polypropilene, also covering the orifice of the filtered water entrance of the funnnel's tube. This tube that has exit into the lower compartment of the container of vitrified ceramic, has an external suface with spiral relief, that allows the adaptation of two followed washers and a polythene thread, once introduced in the orifice, fix the filter to the base of the upper compartments, once adapted in the orifice, maintaining it in position and avoiding the passage of the water from the upper compartment to the lower one without to have happened through the filter.

The unfiltered water, deposited in the upper compartment, happens first through the hollow cylindric cartridge of microporous ceramic, later happens through its internal coating of silver nitrate next to enter the phase of activated charcoal grains and resin of ionic exchange. Then, before acceding to the orifice of entrance of the funnel's tube which closes the filter's base, the water happens through a fine microfiber fabric of polypropilene to then, filtered, to enter the funnel's tube and come out in drops through an orifice of exit located within the internal space of the lower compartment where it will be deposited and used for domestic consumption by mean of a small faucet.

To complete the description that next will be made and in order to better understand the characteristics of the invention it is accompanied, to the present descriptive memory, a set of figures where they will be understood better, the devices of the invention and as work.

### BRIEF DESCRIPTION OF THE DRAWINGS

Figure 1.- External view of the coupled components which constitute the container of vitrified ceramic.
Figure 2.- External and internal view of the coupled components which constitute the container of vitrified ceramic.
Figure 3.- External and internal view of the container of vitrified ceramic with the filter adapted in its interior.
Figure 4.- External view of the components which constitute the filter.
Figure 5.- External and internal view of the components which characterize the hollow cylindric cartridge of microporous ceramic.
Figure 6.- View of the how the internal components containeid by the hollow cylindric cartridge of microporous ceramic are positioned.
Figure 7.- External and internal view of the non-poisonous polythene funnel which is coupled to the hollow cylindric cartridge of microporous ceramic.
Figure 8.- Internal view of the non-poisonous polyethylene funnel which is coupled to the hollow cylindric cartridge of microporous ceramic.
Figure 9. - View of two followed washers and adjustment polythene thread which maintain the whole of the filter adapted at the base of the upper compartment of the container of vitrified ceramic.

### DESCRIPTION OF A FORM OF PREFERRED ACCOMPLISHMENT

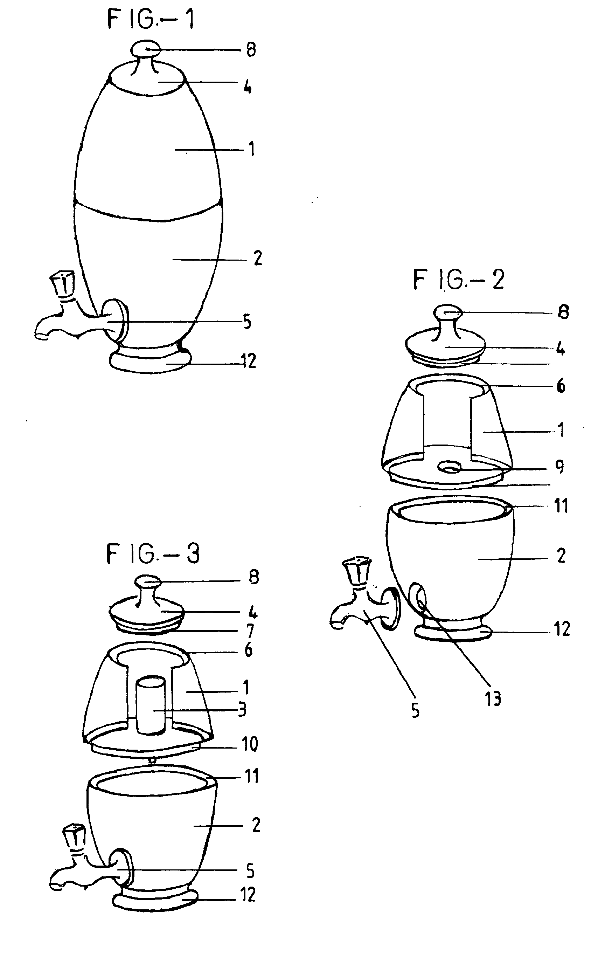

In view of the figures mentioned, it can be observed that the invention is characterized by being constituted of five pieces joined, 1, 2, 3, 4 and 5 connected. If we look at Figure 3 we can appreciate all these elements altogether. Piece 1 talks about the upper compartment of the container of vitrified ceramic that will receive, due to te presence of a superior opening, the unfiltered water; piece 2 talks about the lower compartment of the container of vitrified ceramic where the filtered water will be deposited; piece 3 talks about the filter that it is adapted in the base of upper compartment 1. Piece 4 talks about the lid of vitrified ceramic that adapts to the superior opening of piece 1 and, finally, piece 5 talks about a stainless steel or non-poisonous polyethylene faucet adapted externally and in a side of piece 2 that it has like function, to provide the filtered water, deposited inside piece2.

The superior opening of piece 1 is surrounded by a connection border 6 that will agree with another connection border 7 that is located in the inferior surface of the lid of vitrified ceramic 4, allowing the embroider of both pieces. This lid 4 has a knob 8 on its top to make it easier to manoeuvre. On the inside of piece 1, at its base, there is one or more orifices 9 to make possible the adaptation of a piece 3, or more. Surrounding the outside surface of the base of piece 1 there is another connection border 10 that will agree with a connection border 11 that surrounds the top opening of piece 2. On the side of piece 2 close to its base 12, is a orifice 13 where will be connected a piece 5, that it talks about a stainless steel or non-poisonous polyethylene faucet.

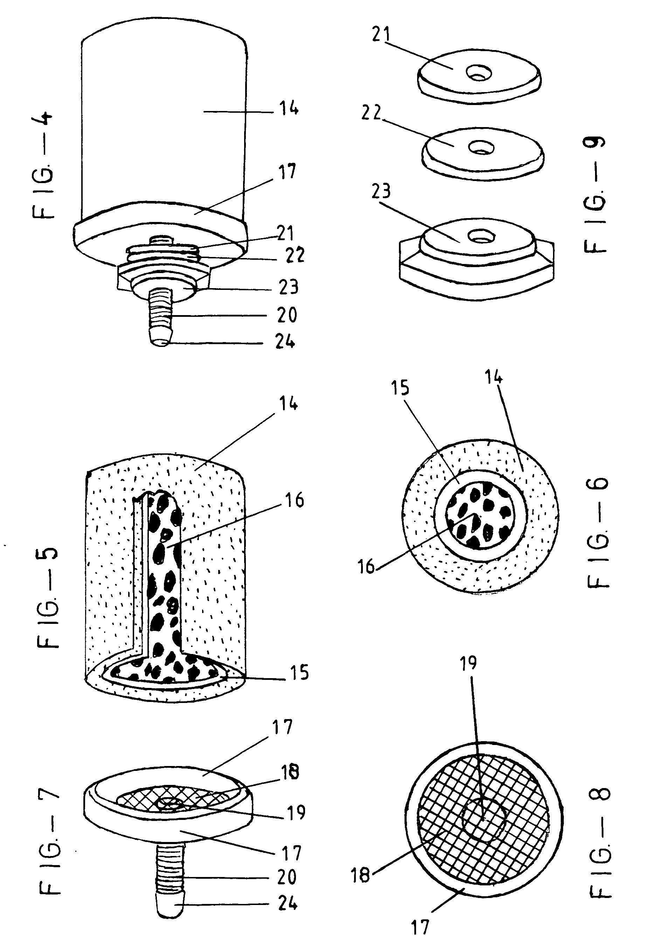

In reference to piece 3, exposed from Figure 4, it is constituted by a hollow cylindric cartridge of microporous ceramic 14 closed in its base with a non-poisonous polythene funnel 17. This hollow cylindric cartridge of microporous ceramic 14 has a internal silver nitrate coating 15, and it inside contains, activated charcoal and resin of ionic exchange 16, both of a grain type.

The non-poisonous polythene funnel 17 closes all the base of the hollow cylindric cartridge of microporous ceramic 14, helping it to contain the activated charcoal and the resin of ionic exchange 16, inside. Internally, it will be covered by a fine microfiber fabric of polypropilene 18 that also covers the orifice 19, where the filtered water enters into the funnel's tube 20. This tube 20, that is entered inside piece 2, due to the presence of orifice 9 in the base of piece 1, has an external surface in spiral form, allowing the adaptation of washers 21 and 22 and a polythene thread 23. Washer 21 will be located between the inner surface of the base of the piece 1 and part of funnel 17 that serves as base for the set of filter 3 and, other washer 22 will be located between the outer surface of the base of piece 1 and thread 23. The purpose of these washers 21 and 22 is to avoid whereupon the water, that is inside piece 1 happens to the interior of piece 2, through orifice 9, without happening through filter 3. The purpose of the thread 23 is to maintain adapted and in position the piece 3, in the base of piece 1. Finally, the filtered water will leave in form of drops towards the interior of piece 2, from the exit orifice 24 of the tube 20.

In summary, the water depositad inside piece 1 will happen through the diverse components that constitute the filter 3 by the following order, first by the hollow cylindric cartridge of microporous ceramic 14, later by the silver nitrate coating 15 next to pass through the granular activated carbon and resin of ionic exchange 16. In the polythene funnel 17 the water will happen through the fine microfiber fabric of polypropylene 18, entering itself filtered through the orifice 19 of the tube 20, that is introduced in the internal space of piece 2. The filtered water will happen through the tube 20 and will leave by its exit orifice 24 in form of drops that are deposited inside piece 2, and will be supplied through faucet 5.

## Claims

1. CONTAINER OF VITRIFIED CERAMIC PROVIDED WITH FILTER FOR WATER FOR DOMESTIC CONSUMPTION, **characterized** mainly by the connection between an upper compartment 1, a lower compartment 2 and a filter 3. Piece 1 has in its base, one or more orifices 9 to adapt, in its interior, one or more filters 3; a connection border 6 surrounding its superior opening where a lid 4 will be adapted, under which it will be a connection border 7 and a upper knob 8 to facilitate his handling; a connection border 10 surrounding the external surface of its base, that makes possible its adaptation with compartment 2. Piece 2 appears surrounded in its open superior part, by a connection border 11 and near its base 12 an orifice 13 exists, where a faucet 5 externally is adapted. The filter 3, that is will adapted in orifice 9, is **characterized by** a hollow cylindric cartridge of microporous ceramic 14 with an internal silver nitrate coating 15 and granular activated carbon and resin of ionic exchange 16, and appearing closed in its base, with a non-poisonous polythene funnel 17 upholstery internally by a fine microfiber fabric of polyethylene 18 that also covers the orifice 19 where enters the filtered water within the tube 20, in whose external surface, it allows the adaptation of washers 21 and 22, as well as of a polythene thread 23, that will maintain the set of the filter 3 in position. The filtered water will leave in form of drops through the exit orifice 24 of the tube 20, depositing itself inside piece 2, and that through the faucet 5 that is connected to orifice 13, will be provided for the domestic consumption.
